# EUROPEAN PATENT APPLICATION

(11) **EP 4 614 029 A1**
(43) Date of publication of application: **10.09.2025**
(21) Application number: 24773345.4
(22) Date of filing: 23.02.2024
(51) Int. Cl.: F16H 49/00, F16H 55/08, F16H 55/14

(54) **FLEXIBLE PIN-TOOTH HARMONIC REDUCER**

(30) Priority: 22.01.2024 CN 202410085936
(71) Applicant: Suzhou Leng Shi Transmission Technology Co., Ltd., Suzhou, Jiangsu 215123 (CN)
(72) Inventor: CHEN, Zhitong, Suzhou, Jiangsu 215123 (CN)
(74) Representative: Cleanthous, Marinos
(86) International application number: PCT/CN2024/078318
(87) International publication number: WO 2025/156343

(57) **Abstract**

The present disclosure discloses a flexible needle-tooth harmonic reducer, including a wave exciter assembly, a flexible gear, and an internal gear assembly; the internal gear assembly includes an internal gear body, needle tooth assemblies, and needle tooth spacer bushes; the needle tooth assemblies are uniformly distributed in small holes on the internal gear body; the wave exciter assembly includes a wave exciter body and a wave exciter bearing; and the wave exciter bearing is mounted between the wave exciter body and the flexible gear. An equidistant line or an equivalent tooth form of a circular tooth form of the internal gear is degraded into a circle with a radius of zero or a point through a needle tooth structure, so that all teeth on the flexible gear and all teeth on the internal gear can be simultaneously meshed. Furthermore, a rigidity control slot is provided on the internal gear body to control the tangential rigidity of internal teeth, so that simultaneous contact of all the teeth at low manufacturing precision can be achieved, and the load uniformity can be controlled. The bearing capacity of the reducer is improved, the service life of the reducer is prolonged, and the requirement for the manufacturing precision is lowered.

## Description

### TECHNICAL FIELD

The present disclosure relates to the technical field of reducers, and specifically, to a flexible needle-tooth harmonic reducer.

### BACKGROUND

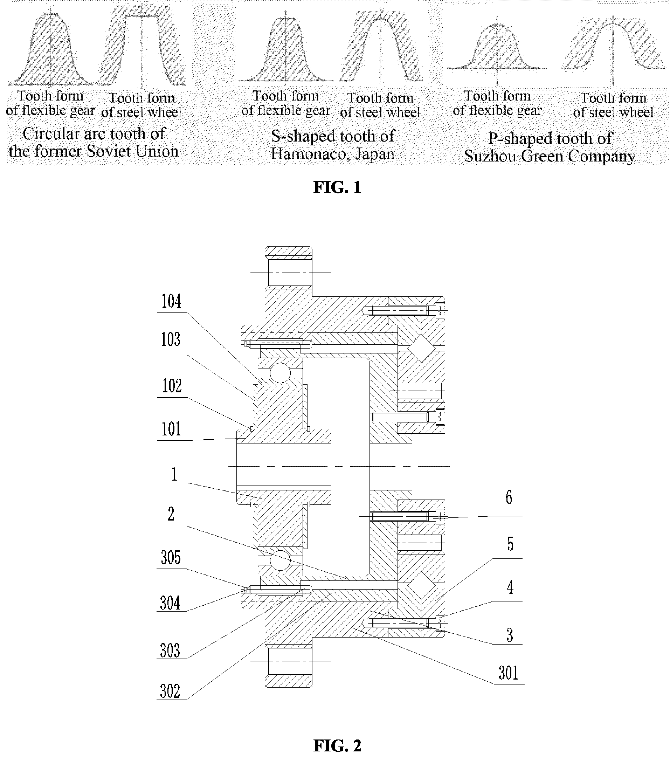

A harmonic reducer is a reducer with a large reduction ratio, which has been successfully applied in the industry of robots. The harmonic reducer has the characteristics of compact structure, large transmission ratio, and few parts. However, this type of reducer also has fatal drawbacks. A tooth form of a gear of the reducer is usually composed of a left curve and a right curve, as shown in FIG. 1, a double-circular-arc tooth form of the former Soviet Union, an S tooth profile of Japan, and a P tooth form of Suzhou Green Company. These tooth forms are prone to various interferences in the structural design, so it is necessary to reduce the number of simultaneously meshed teeth to avoid the interference. Although both a flexible gear and an internal gear have a large number of teeth, only 20-30% of the teeth are simultaneously in contact with each other. Increasing the number of simultaneously meshed teeth has become an important development direction for harmonic reducers. Meanwhile, there is severe linear contact sliding friction between the flexible gear and the internal gear designed with this multi-segment curved tooth form, and tooth wear is easily caused. This not only limits the improvement of the transmission efficiency of the reducer (generally not over 70% at present), but also severely limits the service life and load-bearing capacity of the reducer.

In addition, to achieve multi-tooth meshing and a uniform load in a current harmonic reducer structure, it is necessary to improve the precision of gear manufacturing, which will increase the manufacturing cost of the reducer. It is very important to find a harmonic reducer structure that can achieve a uniform load and reduce the cost.

### SUMMARY

For the defects in the prior art, the present disclosure provides a flexible needle-tooth harmonic reducer, to solve the problems mentioned in the background section.

To achieve the above objectives, the present disclosure provides the following technical solution: A flexible needle-tooth harmonic reducer includes a wave exciter assembly, a flexible gear, and an internal gear assembly, wherein the flexible gear is located between the internal gear assembly and the wave exciter assembly;
the internal gear assembly includes an internal gear body, needle tooth assemblies, and needle tooth spacer bushes; the flexible gear is located in the internal gear body; the needle tooth assemblies are mounted in a group of uniformly distributed incomplete semicircular small holes on an inner cylindrical surface of the internal gear body; the needle tooth spacer bushes are located at one ends of the needle tooth assemblies; the needle tooth spacer bushes are configured to block axial movements of the needle tooth assemblies; the needle tooth assemblies achieve surface contact sliding friction with the group of incomplete semicircular small holes on the internal gear body to reduce contact stress and wear between gear teeth; the needle tooth assemblies are in contact with the flexible gear to achieve rolling friction, so as to improve the bearing capacity and the transmission efficiency;
the wave exciter assembly includes a wave exciter body and a wave exciter bearing; the wave exciter body is located in the flexible gear; the wave exciter body actually looks like a cylindrical cam; a truncated curve of the cylindrical cam is an elliptical or similarly elliptical curve; the tooth form of the flexible gear is adjusted by changing the shape of the curve; or on the contrary, the wave exciter bearing is located on a surface of a cam structure outside the wave exciter body and is in contact with an outer end of an inner surface of the flexible gear; when rotating, the wave exciter body presses all gear teeth of the flexible gear through the wave exciter bearing to perform radial deformation motion; since a tooth profile on an outer ring of the flexible gear having the number of teeth that is two or more less than the number of teeth of the internal gear assembly is in contact with the needle tooth assemblies on the internal gear assembly in sequence and pushes the flexible gear to do low-speed rotation motion relative to the internal gear assembly, slight tangential rotation is achieved when the flexible gear achieves radial deformation, and a deceleration effect where a speed of the flexible gear is much lower than a speed of the wave exciter is achieved;
a flexible gear supporting bearing is arranged at an outer end of the other side of the flexible gear; the flexible gear supporting bearing is connected to the flexible gear and the internal gear assembly respectively, so that the flexible gear and the internal gear assembly achieve coaxial motion; an equivalent curve of the tooth form of the cylindrical gear teeth of the internal gear is degraded into a point or a circle with a radius of zero through a needle tooth structure on the internal gear, so that the problem of multiple tooth shape interferences caused by the fact that the internal gear and the flexible gear of the harmonic reducer use multiple curves is solved, so that all the teeth on the flexible gear and all the teeth on the internal gear are simultaneously meshed; and the number of the simultaneously meshed teeth is increased from 20-30% of the traditional harmonic reducer to nearly 100%, so as to greatly improve the bearing capacity of the reducer and reduce the volume of the reducer.

Preferably, a first wave exciter bearing baffle plate is arranged at a front end of each needle tooth assembly; and a first wave exciter spring clamp ring is arranged at a front end of the first wave exciter bearing baffle plate at the same time to prevent the needle teeth from moving axially in the incomplete small holes.

Preferably, second wave exciter bearing baffle plates are separately arranged on outer wall surfaces of two sides of the wave exciter body; and second wave exciter spring clamp rings are separately arranged on two sides of the second wave exciter bearing baffle plates close to an axis to ensure the stability of axial positions of the wave exciter bearing and the wave exciter body.

Preferably, the same number of rigidity control slots as the needle tooth assemblies are further arranged in a mutual contact region between the internal gear body and the flexible gear in sequence; the rigidity control slots are uniformly distributed on the internal gear body and are staggered from and correspond to teeth of the needle tooth assemblies.

Preferably, the tangential rigidity of gear teeth of the needle tooth assemblies is controlled by the rigidity control slots, and actual shapes and sizes of the rigidity control slots are adjusted according to an actual rigidity and ultimate load of the reducer, so that the uniformity of a load on each needle tooth is controlled under certain manufacturing precision.

Preferably, a first connecting screw and a second connecting screw are respectively arranged on the flexible gear supporting bearing; the first connecting screw is located on an outer ring of the flexible gear supporting bearing; the second connecting screw is located on an inner ring of the flexible gear supporting bearing; the flexible gear supporting bearing is connected to the internal gear body through the first connecting screw; and the flexible gear supporting bearing is connected to the flexible gear through the second connecting screw.

Preferably, steel balls or pin rollers are surrounded inside the wave exciter bearing.

Preferably, coordinate origins and coordinate axes of the various gear teeth on the gear can be obtained according to the principle that an arc-length distance from an intersection point between a center line of the gear teeth of the flexible gear and the outer ring of the wave exciter bearing to an end point of a long axis or a short axis of the elliptical curve of the wave exciter and an arc-length distance from the intersection point to the end point before deformation remain unchanged, and the principle that the center line of the gear teeth is perpendicular to the elliptical curve of the wave exciter, so that the tooth form curve of the flexible gear can be obtained according to a meshing principle.

Preferably, a radial sunken slot is provided between the needle tooth assemblies and the internal gear body to support two ends of the needle teeth and suspend the middle portions of the needle teeth; the radial rigidity of the needle teeth is appropriately reduced and controlled to control the load uniformity of multi-tooth contact between the needle tooth assemblies and the flexible gear, thereby improving the bearing capacity and effectively preventing jamming.

Compared with the prior art, the present disclosure has the beneficial effects below:
1. The present disclosure provides a flexible needle-tooth harmonic reducer. The sliding friction between the gear teeth of the internal gear and the gear teeth of the flexible gear of the traditional harmonic reducer is changed into rolling friction and surface contact sliding friction between the needle teeth and the incomplete cylindrical small holes on the internal gear body. The large contact area between the needle teeth and needle tooth shells is used to improve the sliding friction working condition, enhance the traditional efficiency, significantly improve the bearing capacity, and prolong the service life of the reducer. This solution is expected to increase the transmission efficiency of the harmonic reducer from 70% or below to 80% or above.
2. The present disclosure provides an internal gear slotting and load sharing solution to achieve load sharing and lower the requirement for the manufacturing precision. The internal gear is cut to form the rigidity control slots with certain shapes and lengths to reduce the rigidity of the gear teeth of the internal gear, and the rigidity can be ensured to meet the design requirements under a rated load. Meanwhile, the requirement for the manufacturing precision of the reducer is lowered, and the manufacturing cost of the harmonic reducer is further reduced.
3. In the present disclosure, the internal gear with the needle tooth structure is used, so that the equivalent tooth form of the circular tooth form curve of the internal gear can be degraded to a point (the center of a needle tooth), which can avoid various interference problems caused by a tooth form composed of a plurality of tooth form curves. In theory, all the teeth on the flexible gear can be simultaneously meshed with all the teeth on the internal gear. The number of simultaneously meshed teeth in this way is at least a double of the number of simultaneously meshed teeth of the conventional harmonic reducer. Using the needle teeth can achieve simultaneous meshing of all the teeth, which greatly improves the bearing capacity of the reducer. When the bearing capacity is required to be the same, it is expected to further reduce the volume and weight of the harmonic reducer. This is of great significance for the development of space robots and humanoid robots.

### BRIEF DESCRIPTION OF THE DRAWINGS

The accompanying drawings are intended to provide a further understanding of the present disclosure and constitute a part of this specification. The accompanying drawings and embodiments of the present disclosure are used together to explain the present disclosure rather than constituting a limitation on the present disclosure.

In the drawings:
FIG. 1 is a schematic diagram of tooth forms of several typical harmonic reducers;
FIG. 2 is an axially sectional view of a flexible needle-tooth harmonic reducer of the present disclosure;
FIG. 3 is cross-sectional view of a flexible needle-tooth harmonic reducer of the present disclosure;
FIG. 4 is a schematic diagram of transmission of a flexible needle-tooth harmonic reducer at an initial position of the present disclosure; and
FIG. 5 is a schematic diagram of transmission of a flexible needle-tooth harmonic reducer at any position of the present disclosure.

Numerals in the drawings: 1: wave exciter assembly; 101: wave exciter body; 102: first wave exciter spring clamp ring; 103: first wave exciter bearing baffle plate; 104: wave exciter bearing; 2: flexible gear; 3: internal gear assembly; 301: internal gear body; 302: needle tooth spacer bush; 303: needle tooth assembly; 304: second wave exciter spring clamp ring; 305: second wave exciter bearing baffle plate; 4: first connecting screw; 5: flexible gear supporting bearing; and 6: second connecting screw.

### DETAILED DESCRIPTION OF THE EMBODIMENTS

The embodiments of the present disclosure will be described below with reference to the drawings. It should be understood that the embodiments described here are only used to illustrate and explain the present disclosure and are not intended to limit the present disclosure.

In the needle tooth structure used in an internal gear of a conventional cycloidal pin-wheel reducer, a semi-cylindrical junction surface is provided between needle teeth and needle tooth shells. The needle teeth can slide relative to semicircular holes on the internal gear. Due to a large contact area between the needle teeth and the needle tooth shells, sliding friction with oil film isolation can be achieved when there is an appropriate gap design and an appropriate load. At this time, although a cycloidal gear and the needle teeth are still in line contact, the contact between the needle teeth and the cycloidal gear is rolling friction. This not only significantly improves the transmission efficiency of the reducer, but also reduces the sliding friction wear between gear teeth of the internal gear and gear teeth of a flexible gear.

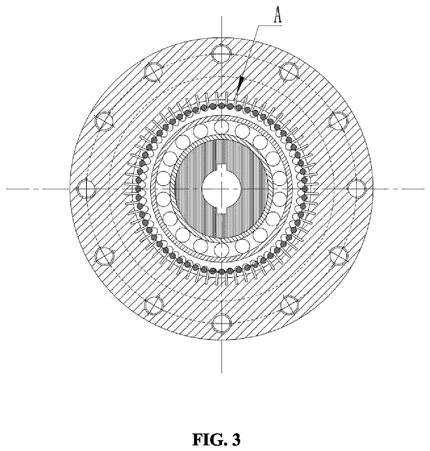

Therefore, the present disclosure provides a flexible needle-tooth harmonic reducer, as shown in FIG. 2 and FIG. 3, including a wave exciter assembly 1, a flexible gear 2, and an internal gear assembly 3. The flexible gear is located between the internal gear assembly 3 and the wave exciter assembly 1.

The internal gear assembly 3 includes an internal gear body 301, needle tooth assemblies 303, and needle tooth spacer bushes 302; the flexible gear 2 is located in the internal gear body 301; the needle tooth assemblies 303 are located in a group of uniformly distributed incomplete semicircular small holes on an inner cylindrical surface of the internal gear body 301; needle tooth washers and spring collars are configured to prevent axial movements of needle teeth in needle tooth shells; and a radial sunken slot is provided between the needle tooth assemblies 303 and the internal gear body 301 to support two ends of the needle teeth and suspend the middle portions of the needle teeth. The radial rigidity of the needle teeth is appropriately reduced and controlled to control the load uniformity of multi-tooth contact between the needle tooth assemblies 303 and the flexible gear 2, thereby improving the bearing capacity and effectively preventing jamming. The needle tooth spacer bushes 302 are located at one ends of the needle tooth assemblies 303; the needle tooth spacer bushes 302 are configured to block axial movements of the needle tooth assemblies 303; a first wave exciter bearing baffle plate 103 is arranged at a front end of each needle tooth assembly 303; and a first wave exciter spring clamp ring 102 is arranged at a front end of the first wave exciter bearing baffle plate 103 to prevent the needle teeth from moving axially in the incomplete small holes. The same number of rigidity control slots as the needle tooth assemblies 303 are further arranged in a mutual contact region between the internal gear body 301 and the flexible gear 2 in sequence; and the rigidity control slots are uniformly distributed on the internal gear body 301 and are staggered from and correspond to teeth of the needle tooth assemblies 303. The tangential rigidity of gear teeth of the needle tooth assemblies 303 is controlled by the rigidity control slots actual shapes and sizes of the rigidity control slots are adjusted according to an actual rigidity and ultimate load of the reducer, so that the uniformity of a load on each needle tooth is controlled under certain manufacturing precision. The needle tooth assemblies 303 achieve surface contact sliding friction with the group of incomplete semicircular small holes on the internal gear body 301 to reduce contact stress and wear between gear teeth. The needle tooth assemblies 303 are in contact with the flexible gear 2 to achieve rolling friction, so as to improve the bearing capacity and the transmission efficiency.

The wave exciter assembly 1 includes a wave exciter body 101 and a wave exciter bearing 104; the wave exciter body 101 is located in the flexible gear 2; the wave exciter body actually looks like a cylindrical cam; a truncated curve of the cylindrical cam is an elliptical or similarly elliptical curve; the tooth form of the flexible gear 2 is adjusted by changing the shape of the curve; or on the contrary, the wave exciter bearing 104 is located on a surface of a cam structure outside the wave exciter body 101; steel balls or pin rollers are surrounded inside the wave exciter bearing 104 and are in contact with an outer end of an inner surface of the flexible gear 2; second wave exciter bearing baffle plates 305 are separately arranged on outer wall surfaces of two sides of the wave exciter body 101; and second wave exciter spring clamp rings 304 are separately arranged on two sides of the second wave exciter bearing baffle plates 305 close to an axis to ensure the stability of axial positions of the wave exciter bearing 104 and the wave exciter body 101. When rotating, the wave exciter body 101 can press all gear teeth of the flexible gear 2 through the wave exciter bearing 104 to perform radial deformation motion; since a tooth profile on an outer ring of the flexible gear 2 having the number of teeth that is two or more less than the number of teeth of the internal gear assembly 3 is in contact with the needle tooth assemblies 303 on the internal gear assembly 3 in sequence and pushes the flexible gear 2 to do low-speed rotation motion relative to the internal gear assembly 3, slight tangential rotation is achieved when the flexible gear 2 achieves radial deformation, and a deceleration effect where a speed of the flexible gear 2 is much lower than a speed of the wave exciter is achieved;
a flexible gear supporting bearing 5 is arranged at an outer end of the other side of the flexible gear 2; and the flexible gear supporting bearing 5 is connected to the flexible gear 2 and the internal gear assembly 3 respectively, so that the flexible gear 2 and the internal gear assembly 3 achieve coaxial motion. A first connecting screw 4 and a second connecting screw 6 are respectively arranged on the flexible gear supporting bearing 5; the first connecting screw 4 is located on an outer ring of the flexible gear supporting bearing 5; the second connecting screw 6 is located on an inner ring of the flexible gear supporting bearing 5; the flexible gear supporting bearing 5 is connected to the internal gear body 301 through the first connecting screw 4; and the flexible gear supporting bearing 5 is connected to the flexible gear 2 through the second connecting screw 6. Coordinate origins and coordinate axes of the various gear teeth on the gear can be obtained according to the principle that an arc-length distance from an intersection point between a center line of the gear teeth of the flexible gear 2 and the outer ring of the wave exciter bearing 104 to an end point of a long axis or a short axis of the elliptical curve of the wave exciter and an arc-length distance from the intersection point to the end point before deformation remain unchanged, and the principle that the center line of the gear teeth is perpendicular to the elliptical curve of the wave exciter, so that the tooth form curve of the flexible gear 2 can be obtained according to a meshing principle. Furthermore, an equivalent curve of the tooth form of the cylindrical gear teeth of the internal gear is degraded into a point or a circle with a radius of zero through a needle tooth structure on the internal gear, so that the problem of multiple tooth shape interferences caused by the fact that the internal gear and the flexible gear of the harmonic reducer use multiple curves is solved, so that all the teeth on the flexible gear 2 and all the teeth on the internal gear are simultaneously meshed; and the number of the simultaneously meshed teeth is increased from 20-30% of the traditional harmonic reducer to nearly 100%, so as to greatly improve the bearing capacity of the reducer and reduce the volume of the reducer.

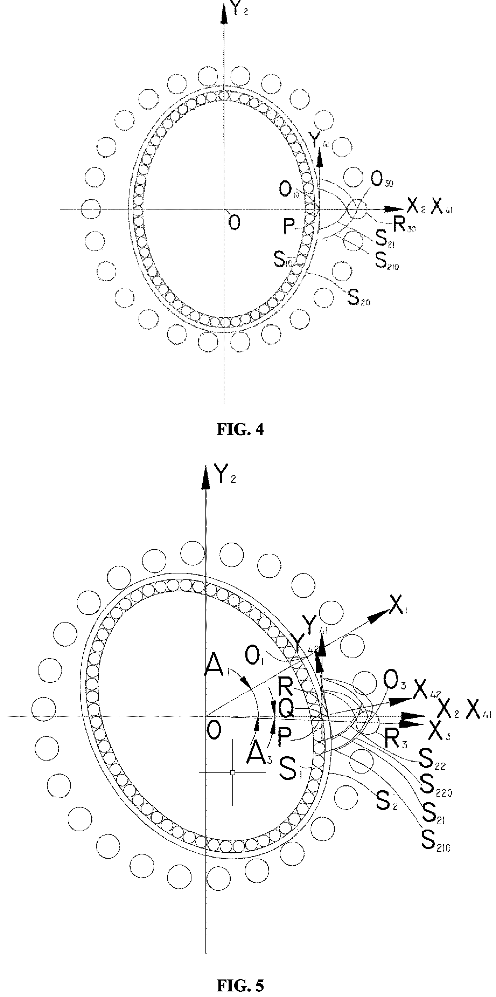

FIG. 4 is a schematic diagram of transmission of a flexible needle-tooth harmonic reducer at an initial position. In the drawing, S₁₀ is an outer contour of the wave exciter body 101; a row of steel balls or pin rollers having a radius of D₁ are uniformly distributed outside; the flexible gear 2 having a thickness of H₂ is provided outside the steel balls; S₂₀ is a tooth bottom curve S₂₀ of the flexible gear 2; O₃₀ and R₃₀ are an initial position of a center of the first needle tooth of the internal gear assembly 3 and a radius of the first needle tooth respectively; and S₂₁₀ and S₂₁ are a theoretical tooth form and an actual tooth form of the first tooth of the flexible gear 2 respectively. Point P is a point, located on curve S₂₀, of the first tooth of the flexible gear 2, and is a coordinate origin of this tooth. P-X₄₁-Y₄₁ is a local coordinate system of the tooth.

FIG. 5 is a schematic diagram of transmission of a flexible needle-tooth harmonic reducer at any position. It is assumed that the flexible gear 2 is non-rotating; a rotating angle of the wave exciter assembly 1 relative to the flexible gear 2 is A₁; a rotating angle of the internal gear assembly 3 relative to the flexible gear 2 is A₃; X₁ and X₃ are positions of the wave exciter assembly 1 and the internal gear assembly 3 on an X-axis coordinate axis respectively; R is a position where point P on the flexible gear 2 is located at the time, and a corresponding first gear tooth coordinate system is R-X₄₂-Y₄₂; O₃ is a position where the center of the first needle tooth of the internal gear assembly 3 is located at the time; and S₂₂₀ and S₂₂ are a theoretical tooth form and an actual tooth form of the first tooth of the flexible gear 2 at the time respectively. O₁ is an intersection point with axis X1 on the flexible gear 2. This point is an end point of a section of curve S₂, and its position in the deformation process of the flexible gear 2 is on axis X₁ all the time (although there is a slight change, it can be ignored). Therefore, this point can be used as a stationary point involved in the tooth form, namely, the angular position of this point is the same as that of the initial position. Assuming that the perimeter of the tooth bottom curve S₂ of the flexible gear 2 remains unchanged, the position of point R can be determined according to an arc length of this point relative to an initial position of point O₁.

To design a complete tooth form of a gear, considering the symmetry of the tooth form, the wave exciter assembly 1 can be enabled to rotate 90 degrees relative to the flexible gear 2. A motion trajectory of point R and a tangential equation of curve S₂ at point R can be obtained within this range, thereby obtaining vector equations of the various coordinate axes of the coordinate system R-X₄₂-Y₄₂. Assuming that the tooth form of the flexible gear 2 does not significantly change in a kernel process, a relative motion equation of point O₃ on the coordinate system R-X₄₂-Y₄₂ can be obtained according to coordinate transformation. This equation is an equation of curve S₂₂₀. The actual tooth form S₂₂ of the first tooth of the flexible gear 2 can be further obtained according to an equidistant relation between S₂₂ and S₂₂₀.

In addition, a solution that is symmetric about the above structural solution is further provided: The structure of internal teeth and the structure of external teeth are interchanged. Namely, the gear teeth of the flexible gear in FIG. 2 and FIG. 3 are replaced with needle teeth, and the internal gear is replaced with a conventional gear, i.e., a gear with integrated gear teeth and base body. This further reduces the radial rigidity of the flexible gear 2 and meets the requirement for the fatigue strength of a material.

It should be finally noted that: The foregoing embodiments are merely preferred examples of the present disclosure, but not intended to limit the present disclosure. Although the present disclosure is described in detail with reference to the foregoing embodiments, a person of ordinary skill in the art may still make modifications to the technical solutions described in the foregoing respective embodiments or make equivalent replacements to partial technical features thereof. Any modification, equivalent replacement, and improvement made within the spirit and scope of the present disclosure shall fall within the protection scope of the present disclosure.

## Claims

1. A flexible needle-tooth harmonic reducer, comprising a wave exciter assembly, a flexible gear, and an internal gear assembly, wherein the flexible gear is located between the internal gear assembly and the wave exciter assembly;
the internal gear assembly comprises an internal gear body, needle tooth assemblies, and needle tooth spacer bushes; the flexible gear is located in the internal gear body; the needle tooth assemblies are located in a group of uniformly distributed incomplete semicircular small holes on an inner cylindrical surface of the internal gear body; the needle tooth spacer bushes are located at one ends of the needle tooth assemblies; the needle tooth spacer bushes are configured to block axial movements of the needle tooth assemblies; the needle tooth assemblies achieve surface contact sliding friction with the incomplete small holes on the internal gear body, and are in contact with the flexible gear to achieve rolling friction, so as to improve the bearing capacity and the transmission efficiency;
the wave exciter assembly comprises a wave exciter body and a wave exciter bearing; the wave exciter body is located in the flexible gear; the wave exciter bearing is located on a surface of a cam structure outside the wave exciter body and is in contact with an outer end of an inner surface of the flexible gear; when rotating, the wave exciter body presses the flexible gear through the wave exciter bearing to perform radial deformation motion; since a tooth profile on an outer ring of the flexible gear having the number of teeth that is two or more less than the number of teeth of the internal gear assembly is in contact with the needle tooth assemblies on the internal gear assembly in sequence and pushes the flexible gear to do low-speed rotation motion relative to the internal gear assembly, a deceleration effect is achieved;
a flexible gear supporting bearing is arranged at an outer end of the other side of the flexible gear; the flexible gear supporting bearing is connected to the flexible gear and the internal gear assembly respectively, so that the flexible gear and the internal gear assembly achieve coaxial motion; and a tooth form of cylindrical needle teeth of the internal gear is degraded into a point or a circle with a radius of zero by using a needle tooth structure, so that tooth form interferences between the internal gear and the flexible gear are solved, and all teeth on the flexible gear and all teeth on the internal gear are simultaneously meshed.

2. The flexible needle-tooth harmonic reducer according to claim 1, wherein a first wave exciter bearing baffle plate is arranged at a front end of each needle tooth assembly; and a first wave exciter spring clamp ring is arranged at a front end of the first wave exciter bearing baffle plate at the same time to prevent the needle tooth assembly from moving axially relative to the internal gear body.

3. The flexible needle-tooth harmonic reducer according to claim 1, wherein second wave exciter bearing baffle plates are separately arranged on outer wall surfaces of two sides of the wave exciter body; and second wave exciter spring clamp rings are separately arranged on two sides of the second wave exciter bearing baffle plates close to an axis to ensure the stability of axial positions of the wave exciter bearing and the wave exciter body.

4. The flexible needle-tooth harmonic reducer according to claim 1, wherein the same number of rigidity control slots as the needle tooth assemblies are arranged in a mutual contact region between the internal gear body and the flexible gear; the rigidity control slots are uniformly distributed on the internal gear body and are staggered from and correspond to teeth of the needle tooth assemblies.

5. The flexible needle-tooth harmonic reducer according to claim 4, wherein the tangential rigidity of gear teeth of the needle tooth assemblies is controlled by the rigidity control slots, and actual shapes and sizes of the rigidity control slots are adjusted according to an actual rigidity and ultimate load of the reducer, so that the uniformity of a load on each needle tooth is controlled under certain manufacturing precision.

6. The flexible needle-tooth harmonic reducer according to claim 1, wherein a first connecting screw and a second connecting screw are respectively arranged on the flexible gear supporting bearing; the first connecting screw is located on an outer ring of the flexible gear supporting bearing; the second connecting screw is located on an inner ring of the flexible gear supporting bearing; the flexible gear supporting bearing is connected to the internal gear body through the first connecting screw; and the flexible gear supporting bearing is connected to the flexible gear through the second connecting screw.

7. The flexible needle-tooth harmonic reducer according to claim 1, wherein steel balls or pin rollers are surrounded inside the wave exciter bearing.

8. The flexible needle-tooth harmonic reducer according to claim 1, wherein a tooth form curve of the flexible gear is obtained by finding a coordinate origin and a coordinate axis direction on the gear through a distance between an intersection point of a center line of gear teeth of the flexible gear and an end point of a long axis or a short axis of a curve of the wave exciter according to the principle of arc length invariance, and the principle that the symmetrical center line of the gear teeth of the flexible gear is perpendicular to the curve of the wave exciter.

9. The flexible needle-tooth harmonic reducer according to claim 1, wherein a radial sunken slot is provided between the needle tooth assemblies and the internal gear body to support two ends of the needle teeth and suspend the middle portions of the needle teeth; the radial rigidity of the needle teeth is appropriately reduced and controlled to control the load uniformity of multi-tooth contact between the needle tooth assemblies and the flexible gear, thereby improving the bearing capacity and effectively preventing jamming.
